# EUROPEAN PATENT APPLICATION

(11) **EP 1 031 267 A1**
(43) Date of publication of application: **30.08.2000**
(21) Application number: 00200591.6
(22) Date of filing: 22.02.2000
(51) Int. Cl.: A01C 15/00, A01C 17/00

(54) **An implement for spreading granular and/or pulverulent material, such as e.g. fertilizer**

(30) Priority: 26.02.1999 NL 1011410
(71) Applicant: MAASLAND N.V., 3155 PD Maasland (NL)
(72) Inventor: van der Lely, Alexander, 3065 NA Rotterdam (NL); van den Berg, Karel, 2971 BR Bleskensgraaf (NL)
(74) Representative: Corten, Maurice Jean F.M.

(57) **Abstract**

The invention relates to an implement for spreading granular and/or pulverulent material, such as e.g. fertilizer, which implement is provided with a first hopper (2) for a first material and at least one spreading member (4) for spreading the first material, said spreading member (4) comprising a first motor-driven spreading disc (5) provided with at least one spreading blade (6), and which implement is further provided with a first metering device (7) by means of which the first material from the first hopper (2) can be admitted to the spreading disc (5). The implement is further provided with at least one second hopper (11) into which a second granular and/or pulverulent material to be spread can be brought, while the implement is further provided with one second metering device (12) by means of which the second material from the second hopper (11) can be admitted to the spreading disc (5).

## Description

The invention relates to an implement for spreading granular and/or pulverulent material, such as e.g. fertilizer, which implement is provided with a hopper for the material and at least one spreading member for spreading the material, said spreading member comprising a motor-driven spreading disc provided with at least one spreading blade, and which implement is further provided with a first metering device by means of which the material from the first hopper can be admitted to the spreading disc.

Such an implement is known.

In the known implement usually one type of fertilizer with a specific composition is spread. There are also implements known, in which a mix of different sorts of fertilizer is made before these fertilizer sorts are spread by the spreading discs.

The above-mentioned implements have the disadvantage that the material is uniformly spread over the parcel, while it is sometimes desirable to broadcast on a specific part of the area to be spread another sort of fertilizer or, on the contrary, some extra fertilizer of the same sort.

The invention aims at providing an implement in which the above-mentioned drawbacks do not occur or are at least minimized.

In accordance with the invention this is achieved in that the implement is provided with at least one second hopper into which a second granular and/or pulverulent material to be spread can be brought, while the implement is further provided with a second metering device by means of which the second material from the second hopper can be admitted to the spreading disc. In this situation the second material may be identical to the first material or may be a material of another type or sort. In the above-described manner it is thus possible during spreading of the material to provide a specific part of the parcel with an extra dosage or to add, on the contrary, an extra material to the first material. In order to ensure that the material will be broadcast accurately at a specific place in the spread pattern, the first and/or the second metering device are/is provided with discharge means with the aid of which it is possible to alter the place where the flow of material from the first and/or the second hopper falls on the spreading disc. For the purpose of achieving this in a simple manner, according to an inventive feature the discharge means comprise an adjusting mechanism to alter the place where the first and/or the second flow of material fall(s) on the spreading disc. In an embodiment of the invention, the adjusting mechanism comprises a movable outlet nozzle. In order to achieve that the flows of material are accurately guided to the spreading members, according to an inventive feature, a number of guide shafts are disposed above the spreading discs, said guide shafts debouching with one end just above the spreading blade and adjoining with the other end the flow of material from the first and/or the second metering device. In this manner the flow of material is prevented from being disturbed by the turbulence of e.g. the spreading blades. In a preferred embodiment of the invention, the guide shafts are arranged so as to be coaxial relative to the axis of rotation of the spreading disc. In said coaxial arrangement the guide shafts may be disposed with different radiuses relative to the axis of rotation.

According to another aspect of the invention, the place where the flows of material fall on the spreading disc is controlled by a computer which makes the calculation therefor on the basis of the current position of the implement on the parcel to be spread and the fertilization required at that current position. According to a further inventive feature, the implement comprises a sensor, such as e.g. a chlorophyll sensor, by means of which the current required fertilization of a part of the parcel to be spread can be determined. According to again another inventive feature, the current position can be determined by means of a navigation system, such as e.g. GPS or DGPS. According to a further inventive feature, the implement is designed as a multi-disc spreader comprising at least two spreading discs provided with metering devices as described above.

The invention will now be described in further detail with reference to the accompanying drawings, in which:
Figure 1 is a side view of the implement according to the invention;
Figure 2 is a perspective view of part of the implement.

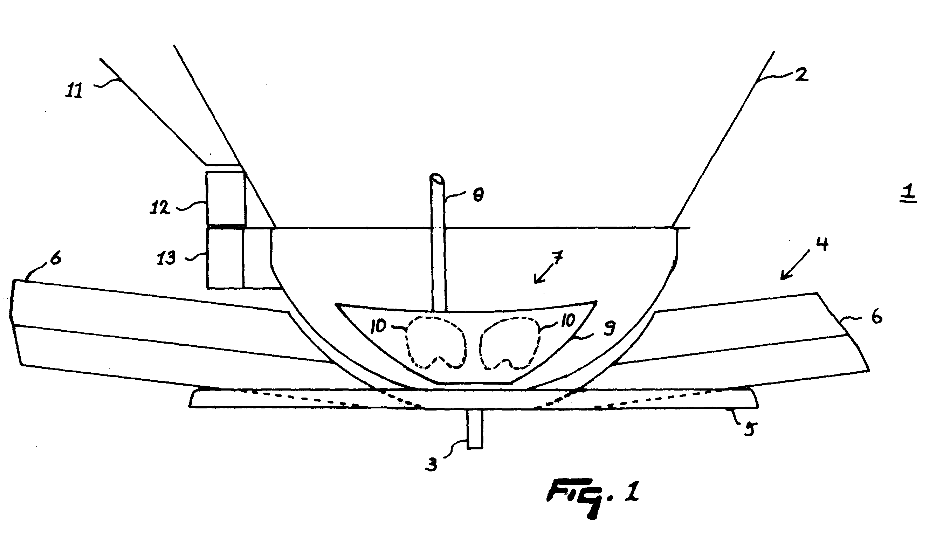

Figure 1 shows a part of a fertilizer spreader 1 known per se which is provided with a first hopper 2 in which material, such as fertilizer, can be stored. Near the bottom side of the first hopper 2 there is disposed a spreading member 4 which is motor-driven about an axis 3, said spreading member 4 comprising a spreading disc 5 on which spreading blades 6 are arranged. Near the bottom side of the first hopper 2 there is further shown only a part of a first metering device 7. The first metering device 7 comprises a partially represented adjusting mechanism 8 by means of which a metering slide 9 can be adjusted along an aperture 10 in the bottom side of the first hopper 2. By means of the first metering device 7 a desired mass flow of the material from the first hopper 2 can be set.

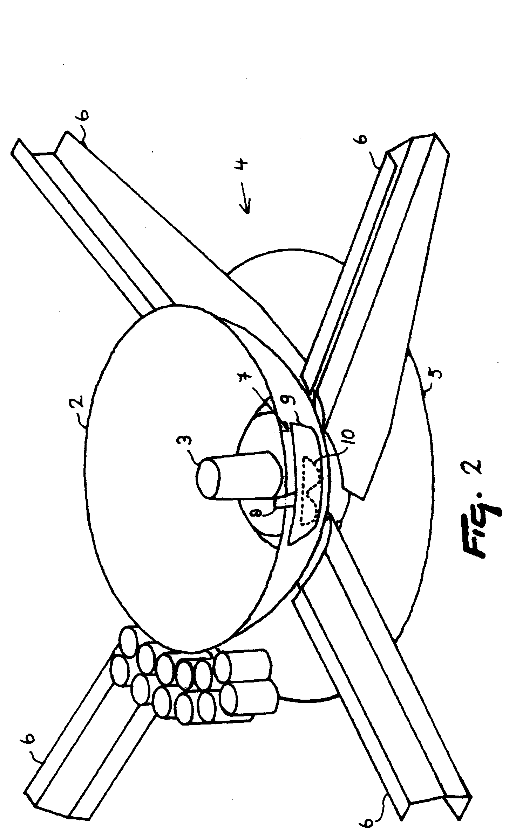

The fertilizer spreader 1 is further provided with a second hopper 11 which, in the present embodiment, is disposed against the wall of the first hopper 2. However, it will be obvious that the second hopper 11 may be arranged at another place in the implement. Near the bottom side of the second hopper 11 there is further disposed a second metering device 12 by means of which a desired mass flow of the material from the second hopper 11 can be adjusted. The second metering device 12 comprises (non-shown) discharge means and an adjusting mechanism by means of which the place where the material from the second hopper 11 falls on the spreading 5 disc can be determined. In order to prevent the spreading blades 6 from disturbing the flow of material from the second hopper 11, near the bottom side of the second metering device 12, as shown in Figure 2, there are arranged two rows of tubular shafts 13, so that the material can fall on the spreading disc 5.

In accordance with the invention it is possible to provide the implement, besides a second hopper 11, with additional hoppers.

## Claims

1. An implement for spreading granular and/or pulverulent material, such as e.g. fertilizer, which implement is provided with a first hopper (2) for a first material and at least one spreading member (4) for spreading the first material, said spreading member (4) comprising a motor-driven spreading disc (5) provided with at least one spreading blade (6), and which implement is further provided with a first metering device (7) by means of which the first material from the first hopper (2) can be admitted to the spreading disc (5), characterized in that the implement is provided with at least one second hopper (11) into which a second granular and/or pulverulent material to be spread can be brought, while the implement is further provided with at least one second metering device (12) by means of which the second material from the second hopper (11) can be admitted to the spreading disc (5).

2. An implement as claimed in claim 1, characterized in that the first and/or the second metering device (7; 12) are/is provided with discharge means with the aid of which it is possible to alter the place where the flow of material from the first and/or the second hopper (2; 11) falls on the spreading disc (5).

3. An implement as claimed in claim 2, characterized in that the discharge means comprise an adjusting mechanism to alter the place where the first and/or the second material fall(s) on the spreading disc (5).

4. An implement as claimed in claim 2 or 3, characterized in that the adjusting mechanism comprises a movable outlet nozzle.

5. An implement as claimed in any one of the preceding claims, characterized in that a number of guide shafts (13) are disposed above the spreading disc (5), said guide shafts (13) debouching with one end just above the spreading blade (6) and adjoining with the other end the flow of material from the first and/or the second metering device (7; 12).

6. An implement as claimed in claim 5, characterized in that the guide shafts (13) are arranged so as to be coaxial relative to the axis of rotation (3) of the spreading disc (5).

7. An implement as claimed in any one of the preceding claims, characterized in that the place where the flows of material fall on the spreading disc (5) is controlled by a computer which makes the calculation therefor on the basis of the current position of the implement and the fertilization required at that current position.

8. An implement as claimed in claim 7, characterized in that the implement comprises a sensor, such as e.g. a chlorophyll sensor, by means of which the current required fertilization of a part of a parcel to be spread can be determined.

9. An implement as claimed in claim 7 or 8, characterized in that the current position is determined by means of a navigation system, such as e.g. GPS or DGPS.

10. An implement as claimed in any one of the preceding claims, characterized in that the implement is constituted by a multi-disc spreader and that at least two spreading discs are provided with metering devices as described in any one of claims 1 to 9.
